# EUROPEAN PATENT APPLICATION

(11) **EP 4 520 446 A1**
(43) Date of publication of application: **12.03.2025**
(21) Application number: 24199352.6
(22) Date of filing: 09.09.2024
(51) Int. Cl.: B05D 1/06, B05D 7/02, B29C 70/88, B05D 3/02

(54) **CONDUCTIVE MOLDED ENCLOSURE**

(30) Priority: 07.09.2023 US 202363581083 P
(71) Applicant: Hoffman Enclosures, Inc., Anoka, MN 55303 (US)
(72) Inventor: Nepsha, William Joseph, Zimmerman (US); Kurtzweg, Steven, Maple Grove (US); Gaveske, Ryan, St. Anthony (US); Ollila, Jennifer, Fridley (US)
(74) Representative: Barker Brettell LLP

(57) **Abstract**

A method (100) of painting an enclosure (10) can include providing (110) an enclosure formed (120) from a conductive sheet molding compound. A powder coating can be applied (130) to at least one surface of the enclosure, and the powder coating can be cured (140) by heating the enclosure at a curing temperature.

## Description

### CROSS-REFERENCE TO RELATED APPLICATION

This application claims priority to U.S. Provisional Patent Application No. 63/581,083, filed September 7, 2023.

### BACKGROUND

Enclosures are used in various industries to conceal and retain different types of supplies, which can include, for example, electrical components.

### SUMMARY

According to an aspect of the disclosed technology a method of painting an enclosure can include providing an enclosure formed from conductive sheet molding compound, including side walls that extend integrally around an internal cavity for electronics. A powder coating can be electrostatically applied to at least one surface of the enclosure. The powder coating can be cured by heating the enclosure at a curing temperature.

In some examples, the powder coating can be applied to each exterior surface of the side walls.

In some examples, the powder coating is applied to each exterior surface of the enclosure.

In some examples, the power coating can be applied to the side walls within the internal cavity.

In some examples, a cover of the enclosure can be provided, also formed from the conductive sheet molding compound and sized to close an opening into the internal cavity. electrostatically applying a powder coating to at least one surface of the cover. The powder coating can be applied to each exterior surface of the cover.

In some examples, the conductive sheet molding compound can be a sheet molding compound including a conductive additive that is carbon-based.

In some examples, the conducting additive can be between 0.1 wt.% and 5 wt.% of the conducting sheet molding compound.

In some examples, the conducting additive can be selected from the group consisting of carbon black, carbon microparticles, carbon nanoparticles, carbon nanotubes, carbon sheets, and mixtures thereof.

In some examples, the curing temperature is between about 120 °C (250 °F) and about 175 °C (350 °F).

According to another aspect of the disclosed technology, an enclosure can include an enclosure body formed integrally from conductive sheet molding compound. For example, side walls can extend integrally around an internal cavity for electronics and define an opening into the internal cavity. A cover can be formed from the conductive sheet molding compound and sized to block the opening into the internal cavity.

In some examples, the enclosure body can be a grounded body via the conductive sheet molding compound.

In some examples, the enclosure body can define a conductive outer surface that extends onto protruding grounding attachment points.

In some examples, the enclosure can further include a cured powder coating on at least one surface of the enclosure body or the cover. The cured powder coating can be a powder paint coating that colors the enclosure.

In some examples, the conductive sheet molding compound can include a conducting additive selected from the group consisting of carbon black, carbon microparticles, carbon nanoparticles, carbon nanotubes, carbon sheets, and mixtures thereof.

In further examples, the enclosure comprises a seamless body defining an internal volume and a conductive outer surface.

According to another aspect of the disclosed technology, a method of grounding an enclosure can include providing an enclosure formed from a conductive sheet molding compound, including side walls that extend integrally around an internal cavity for electronics. A grounding connection can be secured at a conductive outer surface of the enclosure.

In some examples, a powder coating can be electrostatically applied to at least one surface of the enclosure. The powder coating can be cured by heating the enclosure at a curing temperature.

Features which are described in the context of separate aspects and/or embodiments of the invention may be used together and/or be interchangeable wherever possible. Similarly, where features are, for brevity, described in the context of a single embodiment, those features may also be provided separately or in any suitable sub- combination. Features described in connection with the method may have corresponding features definable and/or combinable with respect to the enclosure or vice versa, and these embodiments are specifically envisaged.

### BRIEF DESCRIPTION OF THE DRAWINGS

The accompanying drawings, which are incorporated in and form a part of this specification, illustrate embodiments of the invention and, together with the description, serve to explain the principles of embodiments of the invention:
FIG. 1 is a perspective view of an enclosure, according to some embodiments of the present disclosure.
FIG. 2 is a flow chart illustrating a method for painting an enclosure, according to some embodiments of the present disclosure.
FIG. 3 is a front view of a series of enclosures formed from conductive sheet molding compound, each painted a different color, according to an embodiment of the present disclosure.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Industrial sites can use enclosures to conceal and retain various components or devices on location. This can include, for example, electrical components or other sensitive items that need to be protected from the local environmental factors, including gases, humidity, water, dust, sand, or debris. Some enclosures are therefore designed with minimal seams, joints, gaps, or openings to prevent ingress from the environment.

In some cases, enclosures are formed from a sheet molding compound (e.g., of generally known chemical formulations). The sheet molding compound can be molded to a shape, including part of a rectangular prism, to define the internal volume of the enclosure. In some examples, molded enclosures can include a seamless body having an opening that can be covered by a cover (e.g., door) and through which the interior of the seamless body may be accessed. Structure around the opening or on the cover may include a gasket such that when the cover is closed, the interior is effectively sealed from the environment.

Some sites may have multiple enclosures with different contents. In such cases, it may be useful for the enclosures to be readily distinguishable, for example by color, so as to guide a user to the enclosure with the desired contents. Further, different enclosures may need to have various protective coatings for durability, depending on the nature of the environment or the intended uses of the enclosure. Therefore, there remains a need for enclosures that may be readily coated with paint or other coatings.

Generally, paint or other coatings for enclosures should be of uniform thickness for aesthetic reasons, cost efficiency, and protective capabilities. However, it can be difficult to apply paint to conventional enclosures formed from sheet molding compound. For example, under conventional approaches for this type of material, paint must be applied as a liquid, and efficient application of a coating with a uniform thickness can be problematic when using liquid methods.

For metallic enclosures, electrostatic powder coating methods can provide a uniform coating. However, due to the insulating nature of the resins of most sheet molding compounds, typical electrostatic powder coating methods do not work. Thus, it may be desirable to provide an enclosure formed from a conductive sheet molding compound that allows paint to be applied by electrostatic powder coating methods.

In this regard, some examples of the disclosed technology can provide improved material for enclosures and improved methods for painting or otherwise coating enclosures, particularly enclosures formed from sheet molding compound (or other composites). In particular, in some examples, carbon black or other conductive material can be incorporated into sheet molding compound (or other composite material). As a result, the sheet molding compound (or other composite material) can be caused to hold a sufficiently high static charge to allow power coating procedures to be effectively implemented.

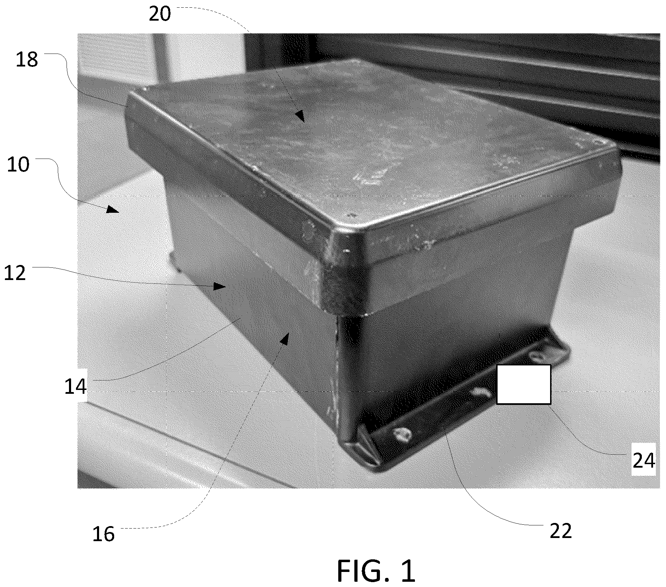

FIG. 1 illustrates an enclosure 10 according to one embodiment of the invention. The enclosure 10 includes a seamless body 12, which can generally include side walls 14 that surround and protect an internal cavity 16. In the example shown, the seamless body 12 is rectangular shaped and is formed from a conductive sheet molding compound. In other examples, however, an enclosure according to the disclosed technology may be differently configured, including as formed with conductive sheet molding compound into non-rectangular shapes.

As also shown in the illustrated example, a cover 18 can be configured to close (e.g., seal) an opening 20 into the internal cavity 16. Generally, the cover 18 can be formed from conductive sheet molding compound similarly to the body 12, with similar benefits as discussed herein.

In some examples, the conductive sheet molding compound can include a base material that includes components that are typical of sheet molding compounds. For example, in a typical sheet molding compound, the base material can be a fiber-reinforced polymeric material. In some examples, the fibers can be glass fibers or carbon fibers. In other examples, the fibers can be natural fibers. In some examples the natural fibers can be plant fibers, for example fibers originating from flax, reeds, shells or seeds. In some examples, the fibers can be woven or matted together. The polymeric material can include thermoset resins such as polyester resin, vinyl ester resin, phenolic, a vinyl urethane, or epoxy resin. The base material can include inert fillers, such as calcium carbonate, pigments, fiber reinforcement, catalysts, stabilizers, release agents, and thickeners. The base material can include flame retardants, for example aluminum trihydrate. The flame retardant can help suppress sparks or fire within the enclosure or external to the enclosure. The base material can include additives that affect the melt temperature.

In particular embodiments, the conductive sheet molding compound includes a conducting additive that imparts a conductive property to the conductive sheet molding compound. In certain embodiments, the conducting additive is carbon-based. In some embodiments, the conducting additive can be carbon black. In further embodiments, the conducting additive can include carbon microparticles, for example carbon microspheres. In other embodiments, the conducting additive can include carbon nanoparticles, for example single-walled carbon nanotubes, multi-walled carbon nanotubes, or mixtures thereof. In some embodiments, the conducting additive can include nanodiamonds. In further embodiments, the conducting additive can include fullerenes, multishell carbon spheres, or mixtures thereof. In still further embodiments, the conducting additive can be about 95% to about 99% carbon. The conducting additive can include carbon sheets, for example graphite, graphene, or graphene oxide. The conducting additive can include mixtures of any of the listed carbon-based additives.

The conducting additive may be characterized by various physical properties, including conductivity, size, morphology, and surface area. In some embodiments, the conducting additive can have a conductivity of between 0.01 S/cm and 300 S/cm. The conducting additive can include carbon particles having a size of between about 15 nm to about 300 nm. The carbon particles may be aggregated. The conducting additive can have a surface area of 100 m2/g to 600 m2/g.

The conducting additive may be incorporated in the sheet molding compound in about 0.1 wt. %, about 0.5 wt. %, about 1 wt. %, about 1.5 wt. %, about 2 wt. %, about 2.5 wt. %, about 3 wt. %, or about 5 wt.%. In some embodiments, the conducting additive may be incorporated in the sheet molding compound between 0.5 wt.% and about 5 wt.%. In other embodiments, the conducting additive may be incorporated in the sheet molding compound between 1 wt.% and about 3 wt.%. In still further embodiments, the conducting additive may be incorporated in the sheet molding compound between 1.5 wt.% and about 2.5 wt.%.

A layered sheet molding compound can be prepared by an in-line process to include at least two layers. In one example of the layered sheet molding compound, a first layer can include a first amount of the conducting additive and can form a first side of the layered sheet molding compound, while a second layer can include a second amount of the conducting additive and can form a second side of the layered sheet molding compound. In some examples, the first amount of the conducting additive can be the same as the second amount of conductive additive. In other examples, the first amount of the conducting additive can be different from the second amount of conductive additive. In the case where the first amount and second amount are different, the conductivity of a first side of the layered sheet molding compound can be different from the conductivity of a second side of the layered sheet molding compound.

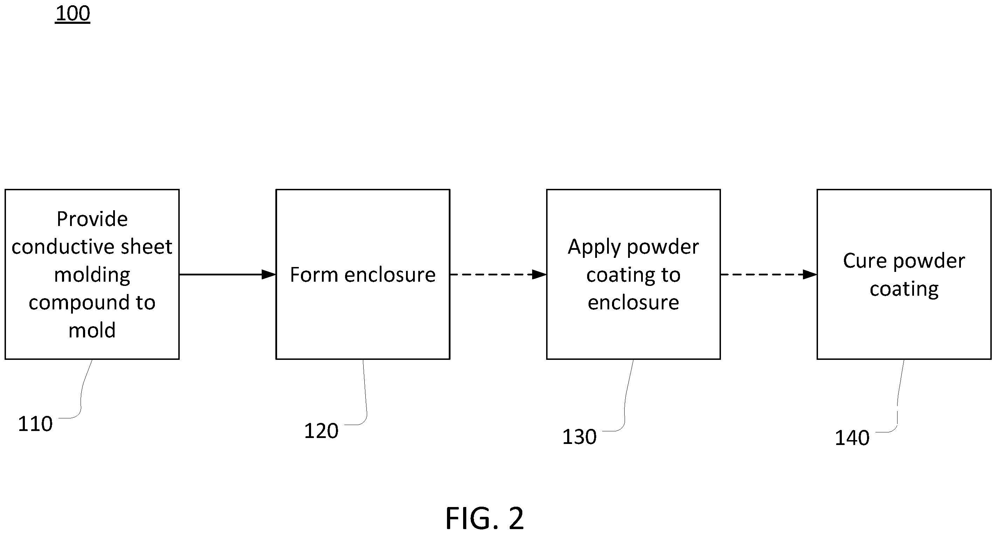

As shown in FIG. 2, conductive sheet molding compound can be used to form an enclosure (e.g., the enclosure 10) according to a method 100, including for powder coating or grounded applications. At 110, the conductive sheet molding compound can be provided to the mold. The conductive sheet molding compound can be subjected to compressive molding or otherwise to form the enclosure in a specified shape (e.g., according to various generally known molding approaches). In some examples, the conductive sheet molding compound can be preheated and placed into the mold. In other examples, the conductive sheet molding compound may be subjected to thermoforming or transfer molding.

In some examples, at 110 the layered sheet molding compound can be subjected to compressive molding to form the enclosure such that the exterior surface of the enclosure has a higher conductivity than the interior surface. Additionally, and alternatively, the layered sheet molding compound can be used to form the enclosure such that the exterior surface of the enclosure has a lower conductivity than the interior surface.

At 120, application of heat and pressure causes the conductive sheet molding compound to spread and fill the mold. After formation in the mold, the enclosure is removed from the mold. In some examples, 120 can include deflashing to remove any extraneous conductive sheet molding compound from the enclosure. The enclosure can be baked to outgas. For example, an outgassing procedure can include baking the enclosure in a 171 °C (340 °F) oven for 20 minutes. The enclosure may further be cleaned and rinsed. In one example, the enclosure can be cleaned by washing the enclosure in standard industrial washes and rinsing with reverse osmosis water.

At 130, as desired, a powder coating is electrostatically applied as a dry powder to the enclosure. The powder coating can include polymer resins, curatives, pigments and leveling agents, or other compositions as are generally known in the art. In one example, triglycidyl isocyanurate (TGIC) polyester and pure polyester low cure powder paints can be used with outgassing additives to relieve any air bubbles during the paint curing process. In some examples, each exterior surface of side walls of an enclosure body, or of an enclosure as a whole (e.g., including a cover) can be powder coated. In some examples, powder coating can be applied to side walls of an enclosure body within an internal cavity. In other examples, the powder coating can be free of TGIC.

In some examples, the powder coating can be an epoxy powder coating. In further examples, the powder coating can be a hybrid or mixture of polyester and epoxy powder coatings. In still further examples, the powder coating can include a fluoropolymer (e.g., polyvinylidene fluoride (PVDF) or fluoroethylene vinyl ether (FEVE)). In some examples, the powder coating can include polyurethane. In further examples, the powder coating can include silicone.

The powder coating can impart a color to the enclosure. In some examples, pigments or dyes can be included in the powder coating. The powder coating can impart a reflectivity to the enclosure. In some examples, reflective particles can be added to the powder coating. In other examples, the powder coating can have a high gloss (>85% reflectivity). In other examples, the powder coating can have a medium gloss (35-85% reflectivity). In other examples, the powder coating can have a low gloss (15-35% reflectivity). In still further examples, the powder coating can have a matte surface (< 15% reflectivity).

The powder coating can impart durability to the enclosure, for example to reduce corrosion, mechanical and environmental damage. In some examples, the powder coating can include additives to improve resistance to heat, photodegradation, water, alkaline conditions, acidic conditions, and salt conditions. In other examples, the powder coating can include additives to increase reduce impact blemishes (e.g., dings, dents). In further examples, the powder coating can include additives to alter the surface texture (e.g., particulate additives to impart a rough texture to the surface). In still further examples, conductive particles can be added to the powder coating.

As the enclosure is formed from conductive sheet molding compound, the enclosure can have a conductive outer surface. To apply the powder coating, electrostatic spray deposition can be used, which gives the particles of the powder an electrostatic charge. When the particles are charged, they become attracted to and stick to the surface of the enclosure. For this process to work, the enclosure must be grounded and carry a negative charge. As the positively charged powder particles attach to the surface of the enclosure, a uniform coating can be achieved (e.g., as the powder coating sticks uniformly to the outer surface of the enclosure).

In some examples, the outer surface of the enclosure can include the surface facing the interior volume of the enclosure. In other examples, the outer surface of the enclosure can include the exterior surface of the enclosure. In further examples, the surface facing the interior volume of the enclosure is less conductive than the outer surface and does not attract powder coating particles. In still further examples, the outer surface is less conductive than the interior-facing surface, and does not attract powder coating particles. The powder coating can be applied to one of the exterior surface and the interior-facing surface of the enclosure. In some examples, portions of the outer surface can be masked during the powder coating such that a logo or other indicia can be formed on the enclosure. In one particular example, powder paint can be electrostatically painted onto the enclosure using a conventional powder paint gun at 70 kV and 15 micro amps.

At 140, after application of the powder coating, the enclosure is placed in a curing oven for the curing process. In particular, the enclosure is heated at a curing temperature. Accordingly, the applied powder chemically reacts to form a dense, cross-linked coating on the surface of the enclosure. According to various protocols, the enclosure can be held at the curing temperature for a predetermined amount of time. The curing temperature can be between about 120 °C (250 °F) and about 175 °C (350 °F). In this regard, for example, the curing temperature may be selected to be sufficiently low so as to avoid off-gassing or other negative effects for the sheet molding compound itself (e.g., as might lead to deformation of the enclosure). The process may be monitored and controlled manually. Additionally, and alternatively, the curing process can be controlled by a computer in an automated system. In one example, the enclosure is placed in a preheated oven and cured at 149 °C (300 °F) for 35 minutes.

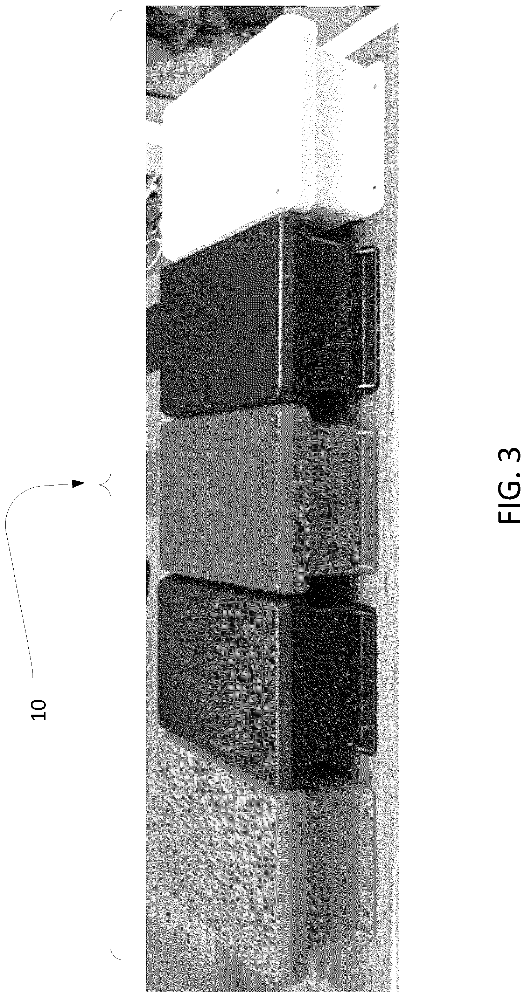

Powder coatings can provide high-quality, durable finishes that are functional, protective, and decorative. Further, powder coatings are available in a wide range of colors and textures. Accordingly, as shown in FIG. 3, enclosures can be painted in a variety of colors using the method as disclosed herein. Further, as also noted above, powder coating can result in a higher quality, more uniform coating than a liquid coating, with corresponding benefits for enclosure performance and life-cycle duration and durability. The powder coating process of the enclosure can also be a simpler process than liquid painting, which may require more steps and produce more waste. Furthermore, powder coating an enclosure can provide an environmentally friendly alternative to liquid painting of enclosures as fewer volatile organic compounds are part of the process.

Further, approaches similar to those used for powder coating (e.g., as discussed above) may also allow for manufacturing of grounded enclosure bodies or covers - i.e., that may be sufficiently conductive so as to provide grounding continuity for the enclosure as a whole (e.g., along a continuous conductive outer surface thereof). For example, use of conductive sheet metal compound with similar (or different) compositions as discussed above can provide sufficient electrical conductivity to an enclosure for various grounding applications. In some cases, a grounding connection can be secured at a protruding feature that provides one or more grounding attachment points. For example, a conductive surface of the enclosure body 12 can extend integrally onto a flange 22 that extends integrally from the body 12 to receive a grounding connector 24 (e.g., screw, wire, clip, etc.), as shown in FIG. 1. In some cases, a grounding connection can be secured after painting (e.g., a described above).

Thus, embodiments of the inventions can provide improved enclosures, methods of manufacturing, and associated installations. For example, enclosures formed from conductive sheet molding compound can be beneficially deployed for grounded applications or to allow effective coating of enclosure walls.

Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

As used herein, unless otherwise limited or defined, discussion of particular directions is provided by example only, with regard to particular embodiments or relevant illustrations. For example, discussion of "top," "front," or "back" features is generally intended as a description only of the orientation of such features relative to a reference frame of a particular example or illustration. Correspondingly, for example, a "top" feature may sometimes be disposed below a "bottom" feature (and so on), in some arrangements or embodiments. Further, references to particular rotational or other movements (e.g., counterclockwise rotation) is generally intended as a description only of movement relative a reference frame of a particular example of illustration.

Unless otherwise specified or limited, the terms "about" and "approximately," as used herein with respect to a reference value, refer to variations from the reference value of ± 20% or less (e.g., ± 15, ± 10%, ± 5%, etc.), inclusive of the endpoints of the range. Similarly, as used herein with respect to a reference value, the term "substantially equal" (and the like) refers to variations from the reference value of less than ± 5% (e.g., ± 2%, ± 1%, ± 0.5%) inclusive. Where specified in particular, "substantially" can indicate a variation in one numerical direction relative to a reference value. For example, the term "substantially less" than a reference value (and the like) indicates a value that is reduced from the reference value by 30% or more (e.g., 35%, 40%, 50%, 65%, 80%), and the term "substantially more" than a reference value (and the like) indicates a value that is increased from the reference value by 30% or more (e.g., 35%, 40%, 50%, 65%, 80%).

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "only one of," or "exactly one of." For example, a list of "only one of A, B, or C" indicates options of: A, but not B and C; B, but not A and C; and C, but not A and B. In contrast, a list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more A, one or more B, and one or more C. Similarly, a list preceded by "a plurality of" (and variations thereon) and including "or" to separate listed elements indicates options of one or more of each of multiple of the listed elements. For example, the phrases "a plurality of A, B, or C" and "two or more of A, B, or C" indicate options of: one or more A and one or more B; one or more B and one or more C; one or more A and one or more C; and one or more A, one or more B, and one or more C.

In some implementations, devices or systems disclosed herein can be utilized, manufactured, installed, etc. using methods embodying aspects of the disclosed technology. Correspondingly, unless otherwise indicated, any description herein of particular features, capabilities, or intended purposes of a device or system should be considered to disclose, as examples of the disclosed technology a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated, discussion herein of any method of manufacturing or using for a particular device or system, including installing the device or system, should be understood to disclose, as examples of the disclosed technology, the utilized features and implemented capabilities of such device or system.

Some methods of the disclosed technology may be presented above or below with operations listed in a particular order. Unless otherwise required or specified, the operations of such methods can be implemented in different orders, in parallel, or as selected sub-sets of one or more individual operations (e.g., with a particular listed operation being implemented alone, rather than in combination with others).

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the method described may be incorporated into/used in a corresponding enclosure and vice versa.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. A method of painting an enclosure, the method comprising:
providing (110) an enclosure (10) formed (120) from conductive sheet molding compound, including side walls (14) that extend integrally around an internal cavity (16) for electronics;
electrostatically applying (130) a powder coating to at least one surface of the enclosure; and
curing (140) the powder coating by heating the enclosure at a curing temperature.

2. The method of claim 1, wherein the powder coating is applied to each exterior surface of the side walls.

3. The method of claim 2, wherein the powder coating is applied to one or more of:
each exterior surface of the enclosure;
the side walls within the internal cavity.

4. The method of any of the preceding claims, further comprising:
providing a cover (18) of the enclosure also formed from conductive sheet molding compound and sized to close an opening into the internal cavity;
electrostatically applying a powder coating to at least one surface of the cover.

5. The method of claim 4, wherein the powder coating is applied to each exterior surface of the cover.

6. The method of any of the preceding claims, wherein the conductive sheet molding compound includes a conductive additive that is carbon-based, and optionally or preferably wherein the conducting additive is between 0.1 wt.% and 5 wt.%.

7. The method of claim 6, wherein the conducting additive is selected from the group consisting of carbon black, carbon microparticles, carbon nanoparticles, carbon nanotubes, carbon sheets, and mixtures thereof.

8. The method of any of the preceding claims, wherein the wherein the conductive sheet molding compound further comprises a flame retardant.

9. The method of any of the preceding claims, wherein the curing temperature is between about 120 °C (250 °F) and about 175 °C (350 °F).

10. An enclosure comprising:
an enclosure body (12) formed integrally from conductive sheet molding compound, including side walls that extend integrally around an internal cavity (16) for electronics and define an opening (20) into the internal cavity; and
a cover (18) formed from the conductive sheet molding compound and sized to block the opening into the internal cavity

11. The enclosure of claim 10, wherein the enclosure body is a grounded body via the conductive sheet molding compound.

12. The enclosure of claim 11, wherein the enclosure body defines a conductive outer surface that extends onto protruding grounding attachment points.

13. The enclosure of any of claims 10 through 12, further comprising a cured powder coating on at least one surface of the enclosure body or the cover.

14. The enclosure of claim 13, wherein the cured powder coating is a powder paint coating that colors the enclosure.

15. The enclosure of any of claims 10 through 14, wherein the conductive sheet molding compound comprises a conducting additive selected from the group consisting of carbon black, carbon microparticles, carbon nanoparticles, carbon nanotubes, carbon sheets, and mixtures thereof.
